# EUROPÄISCHE PATENTSCHRIFT

(11) **EP 0 458 180 B1**
(45) Veröffentlichungstag und Bekanntmachung des Hinweises auf die Patenterteilung: **20.09.1995**
(21) Anmeldenummer: 91107865.7
(22) Anmeldetag: 15.05.1991
(51) Int. Cl.: B23K 26/14, B23K 26/06

(54) **Verfahren und Vorrichtung zum Laserstrahlschneiden**
Process and device for laser beam cutting
Procédé et dispositif pour couper par rayon laser

(30) Priorität: 19.05.1990 DE 4016199
(43) Veröffentlichungstag der Anmeldung: 27.11.1991
(73) Patentinhaber: Linde Aktiengesellschaft, 65189 Wiesbaden (DE)
(72) Erfinder: Mair, Hermann, Dipl.-Ing., W-8000 München 90 (DE); Herrmann, Johann, W-8044 Unterschleissheim (DE)
(74) Vertreter: Schaefer, Gerhard, Dr.

(56) Entgegenhaltungen:
- WO-A-87/07862
- US-A- 3 972 599
- PATENT ABSTRACTS OF JAPAN vol. 13, no. 562 (C-665)13. Dezember 1989
- PATENT ABSTRACTS OF JAPAN vol. 13, no. 28 (M-788)(3376) 23. Januar 1989
- PATENT ABSTRACTS OF JAPAN vol. 6, no. 17 (M-109)(895) 30. Januar 1982

## Beschreibung

Die Erfindung betrifft ein Verfahren zum Laserstrahlschneiden eines Werkstückes mit einem fokussierten Laserstrahl und einem Gasstrahl, die beide durch den Düsenkanal einer Schneiddüse geführt werden, wobei der Brennpunkt des Laserstrahls in einem Abstand vom Werkstück liegt und wobei durch den Düsenkanal mit einem in Strömungsrichtung ersten Bereich mit abnehmendem Querschnitt und mit einem in Strömungsrichtung zweiten Bereich mit gleichbleibendem und/oder zunehmendem Querschnitt der Gasstrahl geleitet wird, sowie eine Vorrichtung zum Laserstrahlschneiden eines Werkstücks mit einem fokussierten Laserstrahl und einem Gasstrahl, die eine Schneiddüse mit einem Düsenkanal für den Laserstrahl und den Gasstrahl umfaßt, wobei die Schneiddüse aus zwei Bereichen besteht und wobei der in Strömungsrichtung erste Bereich einen abnehmenden Querschnitt und der vom Gasstrahl zuletzt durchströmte zweite Bereich einen gleichbleibenden und/oder zunehmenden Querschnitt aufweist.

Verfahren zum Laserstrahlschneiden beruhen auf der Fokussierung eines Laserstrahles in einen Brennpunkt auf der Werkstückoberfläche, der eine so hohe Energiedichte aufweist, daß das Material des Werkstückes auf Zünd-, Schmelz- oder Verdampfungstemperatur gebracht wird. Dieses Material wird dann durch eine zum Laserstrahl koaxiale Schneidgasströmung ausgetrieben bzw. auch in ihm verbrannt (siehe H. Mair, "Thermische Schneidverfahren/ Autogenes Brennschneiden, Plasma-Schmelzschneiden, Laserstrahlschneiden ein technologischer und wirtschaftlicher Vergleich", DVS-Berichte, Band 109, Deutscher Verlag für Schweißtechnik GmbH). Die Form der Schneiddüse ist dadurch bestimmt, daß der Laserstrahl die Düse nicht berührt. Deshalb weist die Düse eine kurze Bauform auf. Diese bedingt, daß der Schneidgasstrahl unmittelbar nach Verlassen der Schneiddüse aufreißt und nicht als scharf gebündelter Gasstrahl zur Werkstückoberfläche strömt. Daraus ergibt sich vor allem bei großen Materialdicken die Gefahr, daß die Schnittflächen nicht ausreichend glatt sind. Außerdem können Werkstücke mit größerer Materialdicke nicht mehr geschnitten werden.

Aus der JP-A-1-234515 ist ein Verfahren und eine Vorrichtung zur Materialbearbeitung mit einem fokussierten Laserstrahl und einem Gasstrahl bekannt, wobei der Fokus des Laserstrahls in einem Abstand vom Werkstück liegt. Im Düsenkanal wird ein den Düsenkanal verengendes Einbauteil (inner part nozzle member) angeordnet mit dem Zweck, die vom Werkstück reflektierte Laserstrahlung zu absorbieren, um schädliche Wirkungen der reflektierten Strahlung auf das optische System oder die Schneiddüse zu verhindern. Mit dem Einbauteil ergibt sich ein Düsenkanal, dessen Querschnitt die kleinste Fläche im Bereich des Fokus aufweist. Der Düsenkanal setzt sich aus einem in Strömungsrichtung ersten Bereich mit abnehmendem Querschnitt und aus einem in Strömungsrichtung zweiten Bereich mit gleichbleibendem und zunehmendem Querschnitt zusammen. Die Länge des zweiten Bereichs ist dabei deutlich geringer als die des in Strömungsrichtung ersten Bereichs. Durch das Einbauteil wird der Gasstrahl außerdem in vier Einzelstrahlen aufgeteilt, die außen am Einbauteil entlang geleitet werden und kein scharf gebündelter Gasstrahl auf das Werkstück trifft.

Die JP-A-56-136295 beschreibt ein Verfahren und eine Vorrichtung zum Laserstrahlschneiden eines Werkstücks mit einem fokussierten Laserstrahl und einem Gasstrahl, die beide durch den Düsenkanal einer Schneiddüse geführt werden, wobei durch den Düsenkanal mit einem in Strömungsrichtung ersten Bereich mit abnehmendem Querschnitt und mit einem in Strömungsrichtung zweiten Bereich mit gleichbleibendem und zunehmendem Querschnitt der Gasstrahl geleitet wird. Die Ausgestaltung des Düsenkanals soll dabei einen Gasstrahl mit Überschallgeschwindigkeit erzeugen. Der zweite Bereich weist eine kürzere Länge auf als der erste Bereich. Der Brennpunkt des Laserstrahls liegt auf der Werkstückfläche.

Der Erfindung liegt die Aufgabe zugrunde, ein Verfahren und eine Vorrichtung der eingangs Art aufzuzeigen, welche ein verbessertes Laserstrahlschneiden ermöglichen und mit denen insbesondere auch Werkstücke mit größerer Materialdicke bei guter Schnittqualität schneidbar sind.

Diese Aufgabe wird erfindungsgemäß für das Verfahren dadurch gelöst, daß durch den Düsenkanal ein scharf gebündelter und im wesentlichen paralleler Gasstrahl von der Schneiddüse zum Werkstück erzeugt wird, indem der zweite Bereich mindestens die Länge des ersten Bereichs aufweist.

Das wesentliche Merkmal der Erfindung liegt darin, daß auf der Werkstückoberfläche ein Brennfleck entsteht und nicht mehr ein scharfer Brennpunkt vorhanden sein muß. Das gestattet, daß die Düsengeometrie nicht mehr ausschließlich auf den Strahlengang des Lasers ausgelegt sein muß, sondern auch wesentlich die Schneidgasströmung berücksichtigen kann. Im erfindungsgemäßen Verfahren wird also bewußt in Kauf genommen, daß das Material auf der gegenüber einem Brennpunkt größeren Fläche des Brennfleckes auf Zünd-, Schmelz- oder Verdampfungstemperatur erhitzt werden muß, was zunächst nachteilig erscheint. Auf der anderen Seite wird aber dadurch erst ermöglicht, daß der Schneidgasstrahl als scharf gebündelter Strahl gegen die Werkstückoberfläche bzw. in die entstehende Schnittfuge trifft. Insgesamt wird eine Verbesserung des Laserstrahlschneidens erreicht. Werkstücke mit größerer Materialdicke sind bei guter Schnittqualität schneidbar.

Ein zusätzlicher Vorteil wird mit dem erfindungsgemäßen Verfahren dadurch erzielt, daß der Laserstrahl im Düsenkanal der Schneiddüse reflektiert wird, bevor er dann als Strahlenbündel den Brennfleck auf der Werkstückoberfläche erzeugt.

Verläßt der Schneidgasstrahl mit Überschallgeschwindigkeit die Schneiddüse, erleichtert das den Schneidvorgang zusätzlich, da mehr Energie zum Werkstrück transportiert wird. Es erhöht sich damit auch die Schnittqualität. Die Schnittqualität des erfindungsgemäßen Verfahrens ist so gut, daß auf eine Nachbearbeitung der Schnittflächen weitestgehend verzichtet werden kann.

Als Schneidgas wird im Falle des Laserstrahlbrennschneidens vorzugsweise Sauerstoff mit einer Reinheit größer oder gleich 99,5 % verwendet. Ein beträchtlicher Anteil der zum Schneiden notwendigen Energie wird dann aus der exothermen Reaktion des Schneidsauerstoffs mit dem zu schneidenden Werkstoff gewonnen. Beim Laserstrahlschmelz- und beim Laserstrahlsublimierschneiden eignen sich als Schneidgas Stickstoff, Argon, Helium, Wasserstoff und/oder Druckluft.

Die erfindungsgemäße, eine Schneiddüse mit zwei Bereichen umfassende Vorrichtung löst die der Erfindung zugrundeliegende Aufgabe dadurch, daß die Länge des zweiten Bereichs mindestens die Länge des ersten Bereichs aufweist, wodurch ein scharf gebündelter und im wesentlichen paralleler Gasstrahl von der Schneiddüse zum Werkstück strömt.

Der in der Strömungsrichtung des Schneidgases erste Bereich ist durch eine Querschnittsverringerung des Düsenkanals in Strömungsrichtung bestimmt. Der in Strömungsrichtung zweite Bereich ist dadurch festgelegt, daß der Querschnitt des Düsenkanals in Strömungsrichtung gleichbleibt oder zunimmt. Die Übergangsfläche zwischen erstem und zweitem Bereich stellt also die Fläche kleinsten Querschnitts im Düsenkanal dar. Der Durchmesser des Düsenkanals beträgt an dieser Übergangsfläche mit dem geringsten Querschnitt vorzugsweise 0,8 bis 1,5 mm. Die Länge des zweiten Bereiches weist mindestens die Länge des ersten Bereiches auf. Eine derartige Schneiddüse bewirkt durch ihre im Vergleich zu Schneiddüsen nach dem Stand der Technik längere Bauform eine wesentlich verbesserte Strömung des Schneidgases. Es resultiert ein scharf gebündelter Schneidgasstrahl zum Werkstück. Durch den scharf gebündelten, nahezu parallelen Strahl der Schneidgasströmung wird Schneidgas vorzugsweise mit Überschallgeschwindigkeit, bis tief in die Schnittfuge geblasen. Folglich lassen sich mit der erfindungsgemäßen Vorrichtung Werkstücke mit größerer Materialsträrke bei guter Schnittqualität schneiden.

In einer weiteren Ausgestaltung der erfindungsgemäßen Vorrichtung wird zumindest der zweite Bereich des Düsenkanals zur Verspiegelung poliert oder beschichtet. Es läßt sich damit ein in der Lasertechnik für diese Leistungsdichten üblicher Reflexionsgrad erzielen. Eine Reflexion des Laserstrahles im Düsenkanal bringt so nur einen minimalen, unvermeidbaren Reflexionsverlust mit sich. Durch Polieren des Düsenkanals, vor allem wenn die Schneiddüse aus Kupfer oder einer kupferhaltigen Legierung besteht, gelingt es, den erwünschten hohen Reflexionsgrad zu erreichen. Ein ausreichend hoher Reflexionsgrad ergibt sich ebenso durch eine in der Lasertechnik übliche Beschichtung. Vor allem, wenn der Laserstrahl in der Düse reflektiert wird, tritt auch eine Erwärmung der Düse auf. Deshalb ist es mitunter besonders vorteilhaft, die Schneiddüse entweder durch Kühlwasser oder andere Kühlmittel wie flüssigen Stickstoff, Sauerstoff, Druckluft, Argon, Helium und/oder CO₂ zu kühlen. Das Kühlmittel kann hierbei in einem geschlossenen oder offenen System fließen. In einem offenen Kühlsystem kann zusätzlich durch eine gleichzeitge Kühlung des zu schneidenden Bleches dessen Wärmeverzug unterbunden werden.

Die Erfindung kann mit besonderem Vorteil eingesetzt werden, da zum Einsatz in einer Laserstrahlschneidanlage nach dem Stand der Technik lediglich die Schneiddüse im Schneidkopf gegen eine erfindungsgemäße Schneiddüse ausgetauscht werden muß.

Besonders vorteilhaft sind zwei spezielle Bauformen der Schneiddüse. Sie gewährleisten durch die Form des Düsenkanals einen auch nach Verlassen der Düse scharf gebündelten Strahl der Schneidgasströmung. Diese Bauformen werden im folgenden anhand zweier Ausführungsbeispiele näher erläutert:
Hierbei zeigen
- Fig. 1: den Strahlengang zwischen Schneidkopf und Werkstück bei Verwendung einer Schneiddüse mit einem konischen Düseneinlauf und im weiteren zylinderförmigen Düsenkanal und
- Fig. 2: den Strahlengang bei Verwendung einer lavaldüsenähnlichen Schneiddüse.

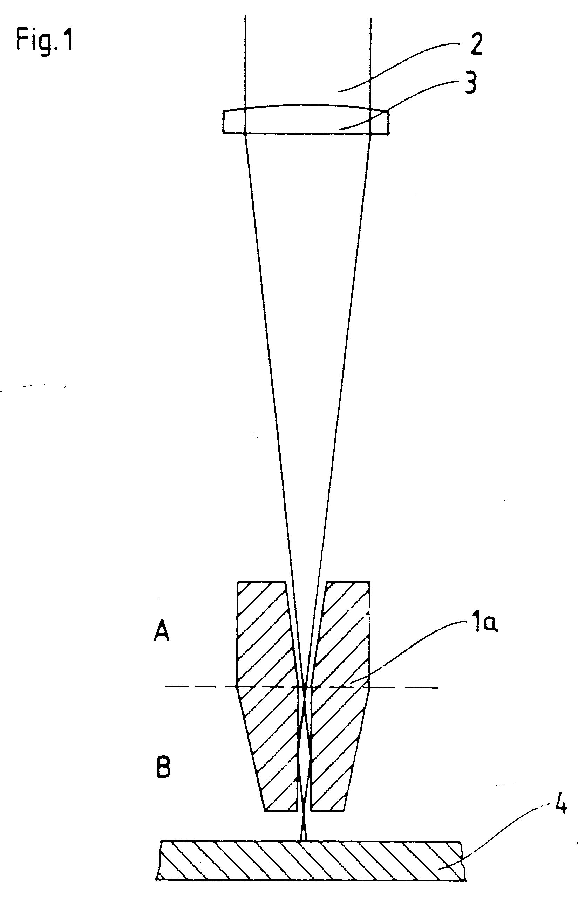

In Fig. 1 ist die Schneiddüse 1a durch die gestrichene Linie in zwei Bereiche A und B eingeteilt. Der in Strömungsrichtung des Schneidgas erste Bereich A besitzt einen konischen Düsenkanal. Der Querschnitt des Düsenkanals nimmt in Strömungsrichtung kontinuierlich ab. Der in Strömungsrichtung zweite Bereich B weist einen zylinderförmigen Düsenkanal auf. Im Bereich B bleibt der Querschnitt des Düsenkanals konstant. Die Länge des Bereiches B übertrifft die des Bereiches A. Der parallel einfallende Laserstrahl 2 wird durch die Fokussierlinse 3 gebündelt. Er trifft, nachdem er am verspiegelten Düsenkanal des Bereiches B reflektiert wird, auf die Oberfläche des zu schneidenden Werkstückes 4. Der entstehende Brennfleck umfaßt dabei einen Durchmesser von ca. 1,0 bis 3,0 mm.

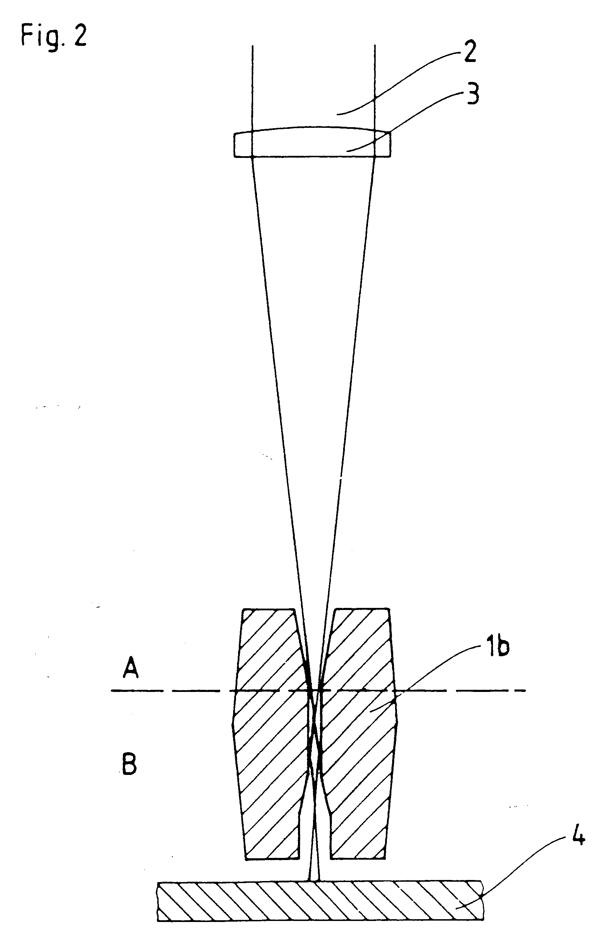

Fig. 2 zeigt eine Lavaldüsen-ähnliche Schneiddüse 1b, ebenfalls unterteilt in die Bereiche A und B. Der in Strömungsrichtung erste Bereich A charakterisiert den Abschnitt des Düsenkanals, dessen Querschnitt sich in Strömungsrichtung verringert. Die gestrichelt dargestellte Trennungslinie zwischen Bereich A und B kennzeichnet die Stelle des Düsenkanals mit dem kleinsten Querschnitt. Der Bereich B teilt sich im dargestellten Fall in drei Unterbereiche mit unterschiedlicher Querschnittscharakteristik des Düsenkanals in Strömungsrichtung. Zunächst bleibt der Querschnitt in Strömungsrichtung in einem zylinderförmigen Teil konstant, dann nimmt er in einem konischen Teil stetig zu und verläuft dann schließlich wieder in einem zylinderförmigen Teil konstant. Durch diese Folge von konischen und zylinderförmigen Düsenkanalbereichen wird ein insgesamt Lavaldüsen-ähnlicher Düsenkanal erreicht. Dabei weist der Abschnitt des Düsenkanals in Bereich B eine größere Länge auf als der in Bereich A. Der parallel einfallende Laserstrahl 2 wird, wie in Fig. 1, durch die Fokussierlinse 3 gebündelt, am Düsenkanal innerhalb des Bereiches B reflektiert und dann auf die Oberfläche des Werkstückes 4 geworfen. Der Brennfleck besitzt einen Durchmesser von ca. 1,0 bis 3,0 mm.

## Patentansprüche

1. Verfahren zum Laserstrahlschileiden eines Werkstückes (4) mit einem fokussierten Laserstrahl (2) und einem Gasstrahl, die beide durch den Düsenkanal einer Schneiddüse (1a; 1b) geführt werden, wobei der Brennpunkt des Laserstrahls (2) in einem Abstand vom Werkstück (4) liegt und wobei durch den Düsenkanal mit einem in Strömungsrichtung ersten Bereich (A) mit abnehmendem Querschnitt und mit einem in Strömungsrichtung zweiten Bereich (B) mit gleichbleibenden, und/oder zunehmendem Querschnitt der Gasstrahl geleitet wird, **dadurch gekennzeichnet**, daß durch den Düsenkanal ein scharf gebündelter und im wesentlichen paralleler Gasstrahl von der Schneiddüse (1a; 1b) zum Werkstück (4) erzeugt wird, indem der zweite Bereich (B) mindestens die Lange des ersten Bereichs (A) aufweist.

2. Verfahren nach Anspruch 1, dadurch gekennzeichnet, daß der Laserstrahl (2) in der Schneiddüse (1a; 1b) reflektiert wird und anschließend als Strahlenbündel auf die Oberfläche des Werkstücks (4) trifft.

3. Verfahren nach einem der Ansprüche 1 oder 2, dadurch gekennzeichnet, daß der Gasstrahl die Schneiddüse (1a; 1b) mit Überschallgeschwindigkeit verläßt.

4. Verfahren nach einem der Ansprüche 1 bis 3, dadurch gekennzeichnet, daß die Schneiddüse (1a; 1b) mittels eines offenen oder geschlossenen Kühlsystems gekühlt wird.

5. Verfahren nach einem der Ansprüche 1 bis 4, dadurch gekennzeichnet, daß der Brennfleck auf dem Werkstück (4) einen Durchmesser von 1 bis 3 mm besitzt.

6. Vorrichtung zum Laserstrahlschneiden eines Werkstücks (4) mit einem fokussierten Laserstrahl (2) und einem Gasstrahl, die eine Schneiddüse (1a; 1b) mit einem Düsenkanal für den Laserstrahl (2) und den Gasstrahl umfaßt, wobei die Schneiddüse (2) aus zwei Bereichen (A, B) besteht und wobei der in Strömungsrichtung erste Bereich (A) einen abnehmenden Querschnitt und der vom Gasstrahl zuletzt durchströmte zweite Bereich (B) einen gleichbleibenden und/oder zunehmenden Querschnitt aufweist, **dadurch gekennzeichnet**, daß die Länge des zweiten Bereichs (B) mindestens die Länge des ersten Bereichs (A) aufweist, wodurch ein scharf gebündelter und im wesentlichen paralleler Gasstrahl von der Schneiddüse (1a; 1b) zum Werkstück (4) strömt.

7. Vorrichtung nach Anspruch 6, dadurch gekennzeichnet, daß der Düsenkanal zumindest im zweiten Bereich (B) zur Verspiegelung poliert oder beschichtet ist.

8. Vorrichtung nach einem der Ansprüche 6 oder 7, dadurch gekennzeichnet, daß der erste Bereich (A) des Düsenkanals konisch und der zweite Bereich (B) zylinderförmig ausgebildet sind.

9. Vorrichtung nach einem der Ansprüche 6 oder 7, dadurch gekennzeichnet, daß der Düsenkanal einen Lavaldüsen-ähnlichen Querschnittsverlauf aufweist.

10. Vorrichtung nach einem der Ansprüche 6 bis 9, dadurch gekennzeichnet, daß die Schneiddüse (1a; 1b) ein geschlossenes oder offenes Kühlsystem umfaßt.

## Claims

1. Method for laser beam cutting of a workpiece (4) with a focused laser beam (2) and a gas stream, both being fed through the nozzle channel of a cutting nozzle (1a; 1b), the focal point of the laser beam (2) being at a distance from the workpiece (4) and the gas stream being led through the nozzle channel having a first region (A) in the flow direction which is of decreasing cross-section and having a second region (B) in the flow direction which is of constant and/or increasing cross-section, characterized in that a sharply focused and essentially parallel gas stream from the cutting nozzle (1a; 1b) towards the workpiece (4) is produced by the nozzle channel owing to the fact that the second region (B) has at least the length of the first region (A).

2. Method according to Claim 1, characterized in that the laser beam (2) is reflected in the cutting nozzle (1a; 1b) and subsequently impinges on the surface of the workpiece (4) as a beam.

3. Method according to either of Claims 1 and 2, characterized in that the gas stream leaves the cutting nozzle (1a; 1b) at ultrasonic speed.

4. Method according to one of Claims 1 to 3, characterized in that the cutting nozzle (1a; 1b) is cooled by means of an open or closed cooling system.

5. Method according to one of Claims 1 to 4, characterized in that the focal spot on the workpiece (4) has a diameter of 1 to 3 mm.

6. Device for laser beam cutting of a workpiece (4) with a focused laser beam (2) and a gas stream, which comprises a cutting nozzle (1a; 1b) with a nozzle channel for the laser beam (2) and the gas stream, the cutting nozzle (2) consisting of two regions (A, B) and the first region (A) in the flow direction having a decreasing cross-section and the second region (B), through which the gas stream last flows, having a constant and/or increasing cross-section, characterized in that the length of the second region (B) has at least the length of the first region (A), as a result of which a sharply focused and essentially parallel gas stream flows from the cutting nozzle (1a; 1b) towards the workpiece (4).

7. Device according to Claim 6, characterized in that at least in the second region (B) the nozzle channel is polished or coated to make it reflective.

8. Device according to either of Claims 6 and 7, characterized in that the first region (A) of the nozzle channel is constructed conically and the second region (B) is constructed cylindrically.

9. Device according to either of Claims 6 and 7, characterized in that the nozzle channel has a cross-sectional characteristic which is like a Laval nozzle.

10. Device according to one of Claims 6 to 9, characterized in that the cutting nozzle (1a; 1b) comprises a closed or open cooling system.

## Revendications

1. Procédé pour couper par rayon laser une pièce à usiner (4) à l'aide d'un rayon laser focalisé (2) et d'un jet de gaz, qui sont tous les deux conduits par le canal de tuyère d'une tête de coupe (1a; 1b), le foyer du rayon laser (2) se trouvant à une certaine distance de la pièce à usiner (4) et le jet de gaz étant guidé à travers le canal de tuyère ayant une première zone (A) de section transversale allant en diminuant dans le sens de l'écoulement et une deuxième zone (B) de section transversale constante et/ou allant en s'élargissant dans le sens de l'écoulement, **caractérisé en ce qu'**un jet de gaz en faisceau serré et essentiellement parallèle, est produit par le canal de tuyère depuis la tête de coupe (1a; 1b) jusqu'à la pièce à usiner (4), la deuxième zone (B) ayant au moins la longueur de la première zone (A).

2. Procédé selon la revendication 1, caractérisé en ce que le rayon laser (2) est réfléchi dans la tête de coupe (1a; 1b) et arrive ensuite sous forme de faisceau de rayons sur la surface de la pièce à usiner (4).

3. Procédé selon l'une quelconque des revendications 1 ou 2, caractérisé en ce que le jet de gaz sort de la tête de coupe (1a; 1b) à une vitesse supersonique.

4. Procédé selon l'une quelconque des revendications 1 à 3, caractérisé en ce que la tête de coupe (1a; 1b) est refroidie au moyen d'un système de refroidissement ouvert ou fermé.

5. Procédé selon l'une quelconque des revendications 1 à 4, caractérisé en ce que le foyer linéaire possède sur la pièce à usiner (4) un diamètre de 1 à 3 mm.

6. Dispositif pour couper par rayon laser une pièce à usiner (4) à l'aide d'un rayon laser focalisé (2) et d'un jet de gaz, qui comprend une tête de coupe (1a; 1b) ayant un canal de tuyère pour le rayon laser (2) et le jet de gaz, la tête de coupe (1a; 1b) étant constituée de deux zones (A, B), la première zone (A) présentant une section transversale allant en diminuant dans le sens de l'écoulement et la deuxième zone (B) traversée ensuite par le jet de gaz présentant une section transversale constante et/ou allant en s'élargissant, **caractérisé en ce que** la longueur de la deuxième zone (B) a au moins la longueur de la première zone (A), grâce à quoi un jet de gaz en faisceau serré et essentiellement parallèle jaillit de la tête de coupe (1a; 1b) jusqu'à la pièce à usiner (4).

7. Dispositif selon la revendication 6, caractérisé en ce que le canal de tuyère est poli ou revêtu, au moins dans la deuxième zone (B), pour former une couche réfléchissante.

8. Dispositif selon l'une quelconque des revendications 6 ou 7, caractérisé en ce que la première zone (A) du canal de tuyère est conçue de forme conique et la deuxième zone (B) est conçue de forme cylindrique.

9. Dispositif selon l'une quelconque des revendications 6 ou 7, caractérisé en ce que le canal de tuyère présente un tracé en section transversale similaire à celui d'une tuyère de Laval.

10. Dispositif selon l'une quelconque des revendications 6 à 9, caractérisé en ce que la tête de coupe (1a; 1b) comprend un système de refroidissement fermé ou ouvert.
